# EUROPEAN PATENT APPLICATION

(11) **EP 4 224 357 A1**
(43) Date of publication of application: **09.08.2023**
(21) Application number: 20956257.8
(22) Date of filing: 30.09.2020
(51) Int. Cl.: G06F 30/398

(54) **ELECTROMAGNETIC FIELD ANALYSIS PROGRAM, ELECTROMAGNETIC FIELD ANALYSIS DEVICE, AND ELECTROMAGNETIC FIELD ANALYSIS METHOD**

(71) Applicant: Fujitsu Limited, Kawasaki-shi, Kanagawa 211-8588 (JP)
(72) Inventor: YAMAZAKI, Takashi, Kawasaki-shi, Kanagawa 211-8588 (JP); YAMANE, Shohei, Kawasaki-shi, Kanagawa 211-8588 (JP); YAMADA, Hiroaki, Kawasaki-shi, Kanagawa 211-8588 (JP); OHARA, Toshiyasu, Kawasaki-shi, Kanagawa 211-8588 (JP); KOCHIBE, Yoichi, Kawasaki-shi, Kanagawa 211-8588 (JP)
(74) Representative: Hoffmann Eitle
(86) International application number: PCT/JP2020/037206
(87) International publication number: WO 2022/070329

(57) **Abstract**

A dimension of a width and a dimension of a thickness of wiring included in first circuit information are specified, second circuit information is generated by changing one of the dimension of the width or the dimension of the thickness to zero based on a ratio between the dimension of the width and the dimension of the thickness, and an electromagnetic field analysis is executed based on the second circuit information.

## Description

### FIELD

The present invention relates to an electromagnetic field analysis technique.

### BACKGROUND

In a case of obtaining characteristics of an electronic circuit board, an electromagnetic field analysis using, for example, a finite difference time domain method (FDTD method) or a spectrum method is performed.

Then, in a case of performing the electromagnetic field analysis as described above by an explicit method, governing equations (Maxwell's equations) are hyperbolic, and thus an operator who performs the electromagnetic field analysis (hereinafter simply referred to as an operator) determines a temporal discretization step by Courant-Friedrichs-Lewy (CFL) condition from the viewpoint of ensuring stability of numerical calculation. Specifically, in this case, an operator determines the temporal discretization step such that the temporal discretization step becomes smaller than a time constant calculated by dividing a minimum spatial discretization step by light speed.

### CITATION LIST

### PATENT DOCUMENT

Patent Document 1: Japanese Laid-open Patent Publication No. 2006-040308
Patent Document 2: Japanese Laid-open Patent Publication No. 2006-053908

### SUMMARY

### [TECHNICAL PROBLEM]

Here, in the electronic circuit board as described above, in general, a minimum length scale in a wiring shape in a vertical direction with respect to a plane of the electronic circuit board (here simply referred to as vertical direction) is smaller than the minimum length scale in the wiring shape in the plane of the electronic circuit board. Therefore, in the electromagnetic field analysis as described above, the minimum spatial discretization step is determined by the dimensions of the width and thickness of wiring corresponding to the minimum length scale in the wiring shape in the vertical direction of the electronic circuit board, for example.

However, for example, there are some cases where the minimum length scales in the wiring shape in the respective directions are significantly different, such as the minimum length scale in the wiring shape in the plane of the electronic circuit board being on the order of 10⁰ (mm) to 10⁻¹ (mm), whereas the minimum length scale in the vertical direction of the electronic circuit board is on the order of 10⁻² (mm). Therefore, in a case where discretization (mesh division) of a circuit included in the electronic circuit board is performed, the minimum spatial discretization step may become extremely small depending on the dimensions of the width and thickness of the wiring. Then, in this case, the temporal discretization step also becomes small due to the necessity of satisfying the CFL condition, which may increase the amount of calculation required to perform the electromagnetic field analysis.

Therefore, in one aspect, an object of the present invention is to provide an electromagnetic field analysis program, an electromagnetic field analysis device, and an electromagnetic field analysis method that enable reduction in the amount of calculation involved in an electromagnetic field analysis.

### [SOLUTION TO PROBLEM]

In one aspect of an embodiment, a computer is caused to execute processing including specifying a dimension of a width and a dimension of a thickness of wiring included in first circuit information, generating second circuit information obtained by changing one of the dimension of the width or the dimension of the thickness to zero based on a ratio between the dimension of the width and the dimension of the thickness, and executing an electromagnetic field analysis based on the second circuit information.

According to an aspect of the embodiments, an electromagnetic field analysis program that causes at least one computer to execute a process, the process includes specifying a dimension of a width and a dimension of a thickness of wiring included in first circuit information; generating second circuit information obtained by changing one of the dimension of the width or the dimension of the thickness to zero based on a ratio between the dimension of the width and the dimension of the thickness; and executing an electromagnetic field analysis based on the second circuit information.

### [ADVANTAGEOUS EFFECTS OF INVENTION]

According to one aspect, reduction in the amount of calculation involved in an electromagnetic field analysis becomes possible.

### BRIEF DESCRIPTION OF DRAWINGS

FIG. 1 is a diagram illustrating a configuration of an information processing system 10;
FIG. 2 is a view for describing a specific example of an electronic circuit board to be analyzed;
FIG. 3 is a view for describing a specific example of an electronic circuit board to be analyzed;
FIG. 4 is a diagram illustrating a hardware configuration of an information processing device 1;
FIG. 5 is a block diagram of functions of the information processing device 1;
FIG. 6 is a flowchart illustrating an outline of electromagnetic field analysis processing in a first embodiment;
FIG. 7 is a flowchart illustrating details of the electromagnetic field analysis processing in the first embodiment;
FIG. 8 is a flowchart illustrating details of the electromagnetic field analysis processing in the first embodiment;
FIG. 9 is a flowchart illustrating details of the electromagnetic field analysis processing in the first embodiment;
FIG. 10 is a table illustrating a specific example of circuit information 131;
FIG. 11 is a table illustrating a specific example of post-change circuit information 132;
FIG. 12 is a view illustrating a specific example of the circuit information 131;
FIG. 13 is a view illustrating details of the electromagnetic field analysis processing in the first embodiment;
FIG. 14 is a table illustrating details of the electromagnetic field analysis processing in the first embodiment;
FIG. 15 is a graph illustrating details of the electromagnetic field analysis processing in the first embodiment; and
FIG. 16 is a graph illustrating details of the electromagnetic field analysis processing in the first embodiment.

### DESCRIPTION OF EMBODIMENTS

### [Configuration of Information Processing System]

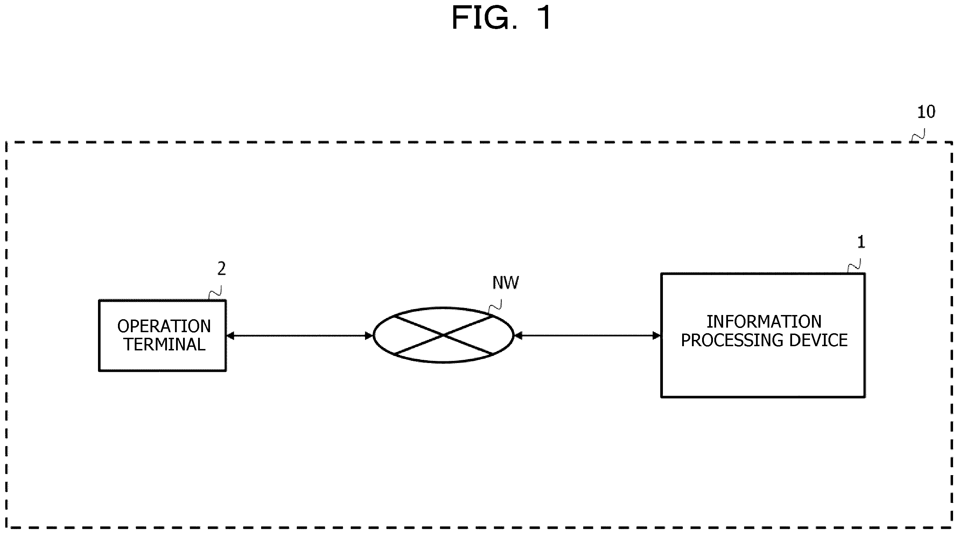

First, a configuration of an information processing system 10 will be described. FIG. 1 is a diagram illustrating a configuration of the information processing system 10.

The information processing system 10 illustrated in FIG. 1 includes an information processing device 1 and an operation terminal 2.

The operation terminal 2 is a terminal that can access the information processing device 1 via a network NW, and may be, for example, a personal computer (PC) or the like for a developer to, for example, input necessary information.

The information processing device 1 is, for example, one or more physical machines. Specifically, the information processing device 1 performs an electromagnetic field analysis of wiring (for example, lines, surface patterns, or the like) included in an electronic circuit board to be analyzed.

### [Specific Example of Electronic Circuit Board to be Analyzed]

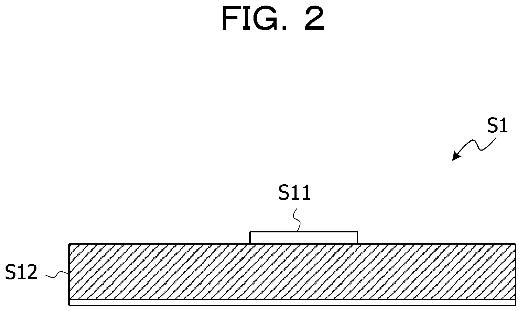

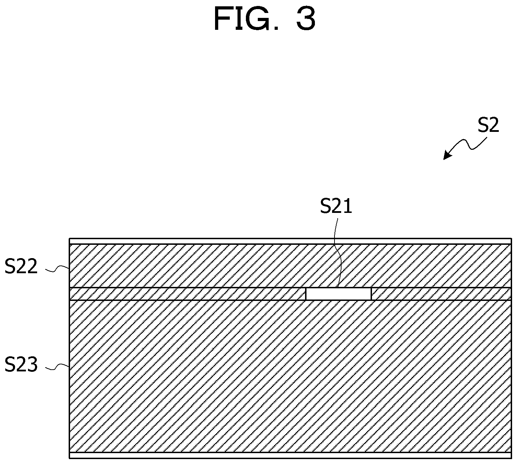

FIGs. 2 and 3 are views for describing specific examples of electronic circuit boards to be analyzed. FIG. 2 is a vertical cross-sectional view of an electronic circuit board S1, and FIG. 3 is a vertical cross-sectional view of an electronic circuit board S2. Note that hereinafter the electronic circuit board S1 and the electronic circuit board S2 are also collectively referred to as an electronic circuit board S.

Specifically, in the electronic circuit board S1 illustrated in FIG. 2, a line S11 is arranged on a surface of a dielectric S12.

Furthermore, in the electronic circuit board S2 illustrated in FIG. 3, a line S21 is arranged at a position sandwiched between a dielectric S22 and a dielectric S23 from above and below.

Here, for example, in a case where a dimension of a width of the line S11 illustrated in FIG. 2 (the dimension in a right-left direction of the line S11 in FIG. 2) and a dimension of a thickness of the line S11 (the dimension in an up-down direction of the line S11 in FIG. 2) are smaller than a length of the line S11 (a length in a depth direction of the line S11 in FIG. 2), a minimum length scale of a geometric structure of the electronic circuit board S1 is determined according to the dimension of the width or the dimension of the thickness of the line S11.

Similarly, for example, in a case where the dimension of the width of the line S21 illustrated in FIG. 3 (the dimension in the right-left direction of the line S21 in FIG. 3) and the thickness of the line S21 (the dimension in the up-down direction of the line S21 in FIG. 3) are smaller than the length of the line S21 (the length in the depth direction of the line S21 in FIG. 3), the minimum length scale of the geometric structure of the electronic circuit board S2 is determined according to the dimension of the width or the dimension of the thickness of the line S21.

However, for example, there are some cases where the minimum length scales in the wiring shape in the respective directions are significantly different, such as the minimum length scale in the plane of the electronic circuit board S being on the order of 10⁰ (mm) to 10⁻¹ (mm), whereas the minimum length scale in the vertical direction with respective to the plane of the electronic circuit board S is on the order of 10⁻² (mm). Therefore, in a case where discretization (mesh division) of a circuit included in the electronic circuit board S is performed, the minimum spatial discretization step may become extremely small depending on the dimensions of the width and thickness of the line. Then, in this case, the temporal discretization step also becomes small due to the necessity of satisfying the CFL condition, which may increase the amount of calculation required to perform the electromagnetic field analysis.

Therefore, the information processing device 1 according to the present embodiment refers to, for example, circuit information (hereinafter also referred to as first circuit information) regarding a circuit included in the electronic circuit board S, and specifies the dimensions of the width and the thickness of the line included in the circuit information. Then, the information processing device 1 generates a post-change circuit information (hereinafter also referred to as second circuit information) in which one of the specified dimension of width or dimension of thickness is changed to zero based on a ratio between the specified dimensions of the width and the thickness. Thereafter, the information processing device 1 executes an electromagnetic field analysis based on the generated second circuit information.

In other words, characteristics of the circuit included in the electronic circuit board S are determined by, for example, the dimensions of the width and thickness of the line, the dimension of the thickness of a layer that configures the electronic circuit board S, and characteristic impedance based on relative permittivity. Therefore, for example, in a case where the dimension of the thickness of the line and the dimension of the width of the line are significantly different, it can be determined that the smaller one of the dimensions of the thickness and the width has less influence on the characteristic impedance.

Therefore, for example, in a case where the dimension of the thickness of the line is sufficiently smaller than the dimension of the width of the line, it can be determined that the influence on the characteristics of the circuit after discretization is performed is small even in a case of changing the dimension of the thickness of the line to be smaller. Meanwhile, for example, in a case where the dimension of the width of the line is sufficiently smaller than the dimension of the thickness of the line, it can be determined that the influence on the characteristics of the circuit after discretization is performed is small even in a case of changing the dimension of the width of the line to be smaller.

Therefore, in the case where the dimension of the thickness of the line is sufficiently smaller than the dimension of the width of the line, the information processing device 1 in the present embodiment performs discretization of the circuit included in the electronic circuit board S after changing the dimension of the thickness of the line to zero by replacing the line with a two-dimensional perfect electric conductor (PEC). Furthermore, in the case where the dimension of the width of the line is sufficiently smaller than the dimension of the thickness of the line, the information processing device 1 in the present embodiment performs discretization of the circuit included in the electronic circuit board S after changing the dimension of the width of the line to zero by replacing the line with a two-dimensional PEC.

Therefore, the information processing device 1 according to the present embodiment can prevent the minimum length scale of the electronic circuit board S from being determined by the smaller one of the dimensions of the width and thickness of the wiring. Therefore, the information processing device 1 can prevent the minimum spatial discretization step from becoming extremely small when performing discretization for the circuit included in the electronic circuit board S.

Moreover, the information processing device 1 can prevent the temporal discretization step determined by the CFL condition from becoming small by increasing the minimum spatial discretization step.

Therefore, the information processing device 1 can suppress the problem size when performing the electromagnetic field analysis, and can suppress an increase in the amount of calculation required for the electromagnetic field analysis.

### [Hardware Configuration of Information Processing System]

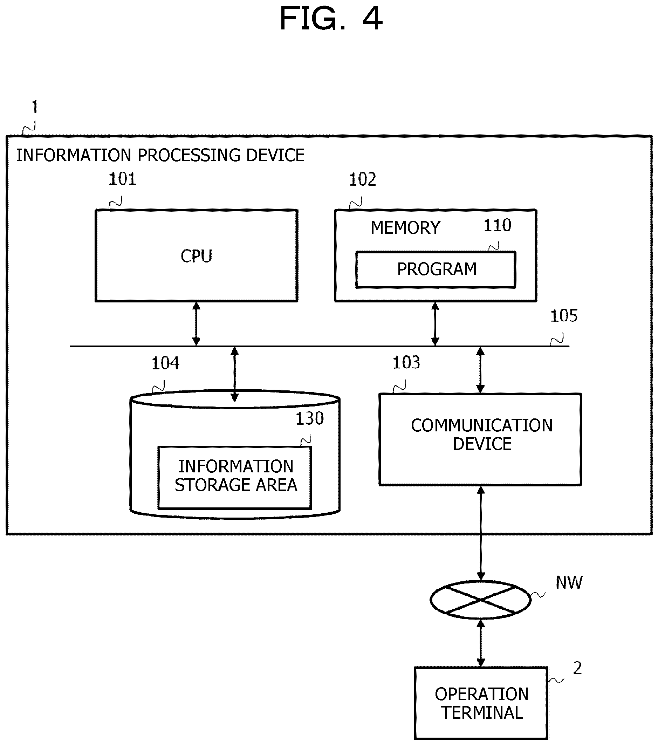

FIG. 4 is a diagram illustrating a hardware configuration of the information processing device 1.

As illustrated in FIG. 4, the information processing device 1 includes a central processing unit (CPU) 101, which is a processor, a memory 102, a communication device 103, and a storage medium 104. The units are coupled to each other via a bus 105.

The storage medium 104 has, for example, a program storage area (not illustrated) for storing a program 110 for performing processing of performing an electromagnetic field analysis (hereinafter also referred to as electromagnetic field analysis processing) for the circuit included in the electronic circuit board S. Furthermore, the storage medium 104 includes, for example, an information storage area 130 that stores information to be used when the electromagnetic field analysis processing is performed. Note that the storage medium 104 may be, for example, a hard disk drive (HDD) or a solid state drive (SSD).

The CPU 101 executes the program 110 loaded from the storage medium 104 into the memory 102 and executes the electromagnetic field analysis processing.

Furthermore, the communication device 103 communicates with the operation terminal 2 via the network NW, for example.

### [Functions of Information Processing System]

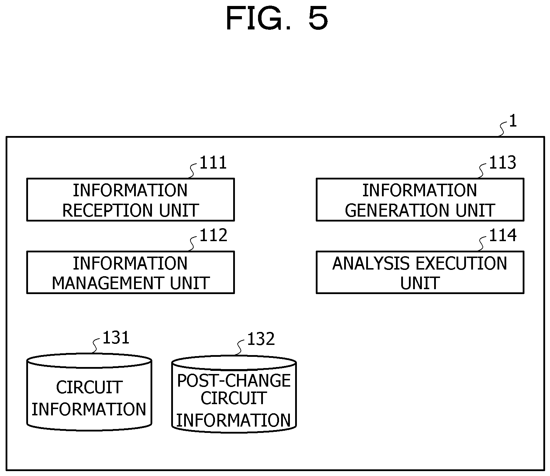

FIG. 5 is a block diagram of the functions of the information processing device 1.

As illustrated in FIG. 5, the information processing device 1 implements various functions including an information reception unit 111, an information management unit 112, an information generation unit 113, and an analysis execution unit 114 by the hardware such as the CPU 101 and the memory 102 being organically in cooperation with the program 110, for example.

Furthermore, the information processing device 1 stores circuit information 131 and post-change circuit information 132 in the information storage area 130, as illustrated in FIG. 5, for example.

The information reception unit 111 receives the circuit information 131 transmitted by a developer via the operation terminal 2, for example. Then, the information management unit 112 stores the circuit information 131 received by the information reception unit 111 in the information storage area 130, for example.

The information generation unit 113 refers to, for example, the circuit information 131 stored in the information storage area 130, and specifies the dimensions of the width and thickness of the line included in the electronic circuit board S. Then, the information generation unit 113 generates the post-change circuit information 132 that is the circuit information 131 in which one of the specified dimensions of width and thickness has been changed to zero based on a ratio between the specified dimensions of the width and the thickness. Then, the information management unit 112 stores the post-change circuit information 132 generated by the information generation unit 113 in the information storage area 130, for example.

The analysis execution unit 114 refers to, for example, the post-change circuit information 132 stored in the information storage area 130, and performs the electromagnetic field analysis included in the electronic circuit board to be analyzed.

### [Outline of First Embodiment]

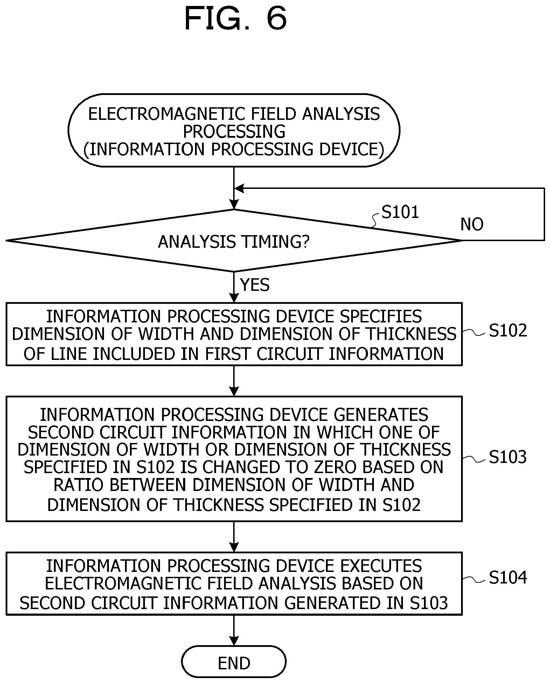

FIG. 6 is a flowchart illustrating an outline of the electromagnetic field analysis processing in the first embodiment.

As illustrated in FIG. 6, the information processing device 1 waits until analysis timing (NO in S101). The analysis timing may be, for example, timing at which the developer inputs information for starting the electromagnetic field analysis via the operation terminal 2.

Then, in a case where the analysis timing has come (YES in S101), the information processing device 1 specifies the dimension of the width and the dimension of the thickness of the line included in the circuit information 131 (S102).

Next, the information processing device 1 generates the post-change circuit information 132 in which one of the dimension of the width and the dimension of the thickness specified in the processing of S102 has been changed to zero based on the ratio between the dimension of the width and the dimension of the thickness specified in the processing of S102 (S103).

Thereafter, the information processing device 1 executes the electromagnetic field analysis based on the post-change circuit information 132 generated in the processing of S103 (S104).

Therefore, the information processing device 1 according to the present embodiment can prevent the minimum length scale of the electronic circuit board S from being determined by the smaller one of the dimensions of the width and thickness of the wiring. Therefore, the information processing device 1 can prevent the minimum spatial discretization step from becoming extremely small when performing discretization for the circuit included in the electronic circuit board S.

Moreover, the information processing device 1 can prevent the temporal discretization step determined by the CFL condition from becoming small by increasing the minimum spatial discretization step.

Therefore, the information processing device 1 can suppress the problem size when performing the electromagnetic field analysis, and can suppress an increase in the amount of calculation required for the electromagnetic field analysis.

### [Details of First Embodiment]

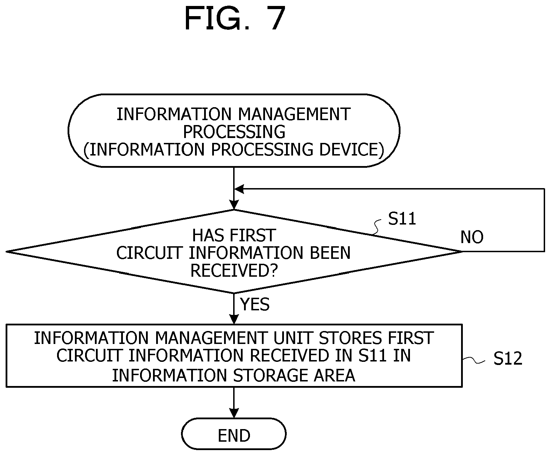

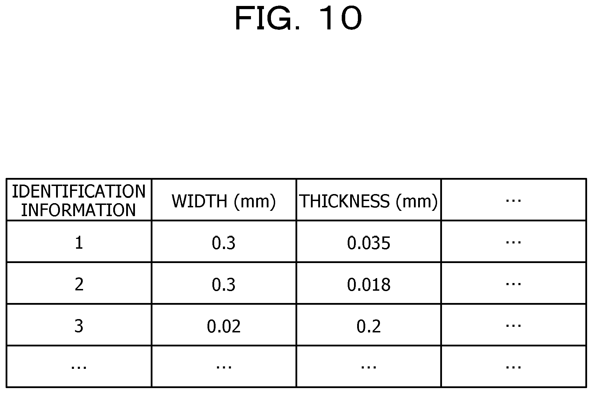

FIGs. 7 to 9 are flowcharts for describing details of the electromagnetic field analysis processing according to the first embodiment. Furthermore, FIGs. 10 to 16 are diagrams illustrating details of the electromagnetic field analysis processing in the first embodiment.

### [Information Management Processing]

First, processing of managing information of the circuit information 131 (hereinafter also referred to as information management processing) in the electromagnetic field analysis processing will be described. FIG. 7 is a flowchart for describing the information management processing.

As illustrated in FIG. 7, the information reception unit 111 of the information processing device 1 waits until receiving the circuit information 131 (NO in S11). Specifically, the information reception unit 111 waits until receiving the circuit information 131 input by the developer via the operation terminal 2, for example.

Then, the information management unit 112 of the information processing device 1 stores the circuit information 131 received in the processing of S11 in the information storage area 130 (S12).

### [Specific Example of Circuit Information]

FIG. 10 is a table illustrating a specific example of the circuit information 131.

The circuit information 131 illustrated in FIG. 10 includes, for example, "identification information" for identifying each line included in the electronic circuit board S, "width" for setting the dimension of the width of each line, and "thickness" for setting the dimension of the thickness of each line, as items.

Specifically, in the information on the first row (information with the "identification information" of "1'') in the circuit information 131 illustrated in FIG. 10, "0.3 (mm)" is set as the "width" and "0.035 (mm)" is set as the "thickness".

Furthermore, in the information on the second row (information with the "identification information" of "2") in the circuit information 131 illustrated in FIG. 10, "0.3 (mm)" is set as the "width" and "0.018 (mm)" is set as the "thickness". Description of other information included in FIG. 10 is omitted.

Hereinafter, description will be given on the assumption that the information on the first row in the circuit information 131 illustrated in FIG. 10 is information corresponding to the line S11 arranged on the electronic circuit board S1 described with reference to FIG. 2. Furthermore, description will be given on the assumption that the information on the second row in the circuit information 131 illustrated in FIG. 10 is information corresponding to the line S21 arranged on the electronic circuit board S2 described with reference to FIG. 3. In other words, hereinafter, the description will be given on the assumption the dimensions of the width and the thickness of the line S11 described with reference to FIG. 2 are "0.3 (mm)" and "0.035 (mm)". Furthermore, the description will be given on the assumption the dimensions of the width and the thickness of the line S21 described with reference to FIG. 3 are "0.3 (mm)" and "0.018 (mm)".

Note that, hereinafter, the description will be given regarding the case where the information regarding the lines arranged on the electronic circuit board S is included in the circuit information 131. However, the circuit information 131 may include information regarding a surface pattern (such as the dimensions of the width and the thickness of a surface pattern) arranged on the electronic circuit board S, for example.

### [Main Processing of Electromagnetic Field Analysis Processing]

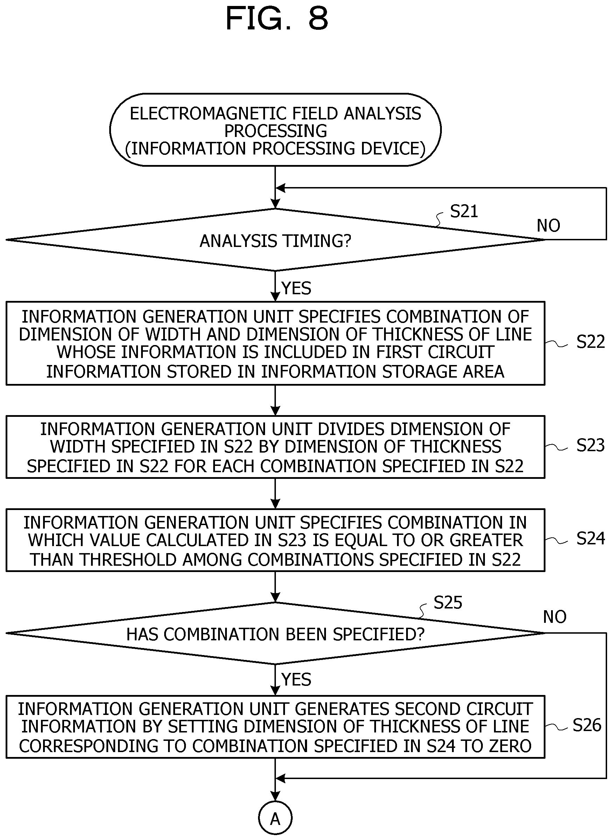

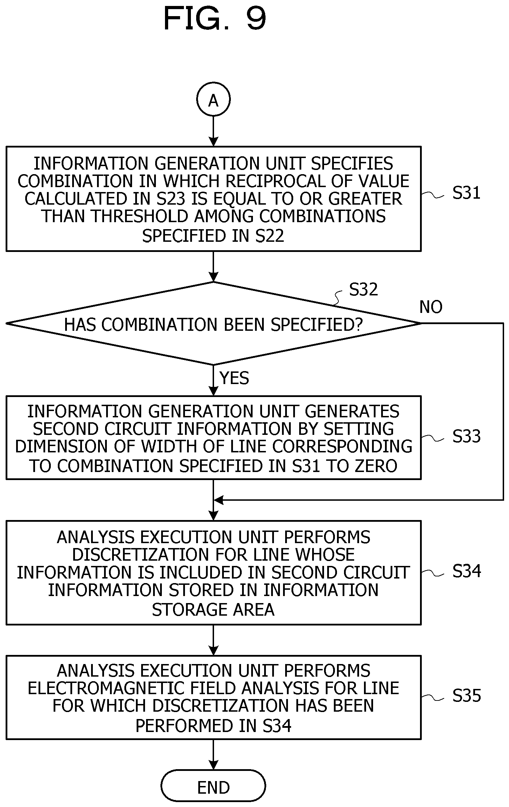

FIGs. 8 and 9 are flowcharts for describing main processing of the electromagnetic field analysis processing.

As illustrated in FIG. 8, the information generation unit 113 of the information processing device 1 waits until the analysis timing (NO in S21). The analysis timing may be, for example, timing at which the developer inputs information for starting the electromagnetic field analysis via the operation terminal 2.

Then, in a case where the analysis timing has come (YES in S21), the information generation unit 113 specifies a combination of the dimension of the width and the dimension of the thickness of the line whose information is included in the circuit information 131 stored in the information storage area 130 (S22).

Specifically, the circuit information 131 illustrated in FIG. 10 includes the information regarding the line with the "identification information" of "1" (the information on the first row) and the information regarding the line with the "identification information" of "2" (the information on the second row), for example. Therefore, the information generation unit 113 specifies the combination of "0.3 (mm)" and "0.035 (mm)" that are the information set to the "width" and "thickness" of the information in which "1" is set to the "identification information", for example. Furthermore, the information generation unit 113 specifies the combination of "0.3 (mm)" and "0.018 (mm)" that are the information set to the "width" and "thickness" of the information in which "2" is set to the "identification information", for example.

Note that, for example, in the case where the information regarding the surface pattern is included in the circuit information 131, the information generation unit 113 may also specify a combination of the dimension of the width and the dimension of the thickness of the surface pattern. Then, in this case, the information processing device 1 may also perform the processing for the surface pattern in the processing of and after S23.

Next, the information generation unit 113 divides the dimension of the width specified in the processing of S22 by the dimension of the thickness specified in the processing of S22, for example, for each combination specified in the processing of S22 (S23).

Specifically, the information generation unit 113 calculates "8.57..." by dividing "0.3 (mm)" by "0.035 (mm)" in the case where the combination of "0.3 (mm)" and "0.035 (mm)" is specified as the combination of the dimension of the width and the dimension of the thickness of the line, for example. Furthermore, the information generation unit 113 calculates "16.66..." by dividing "0.3 (mm)" by "0.018 (mm)" in the case where the combination of "0.3 (mm)" and "0.018 (mm)" is specified as the combination of the dimension of the width and the dimension of the thickness of the line, for example.

Moreover, the information generation unit 113 specifies the combination in which the value calculated in the processing of S23 is equal to or greater than the threshold among the combinations specified in the processing of S22, for example (S24).

As a result, in a case where the combination in which the value calculated in the processing of S23 is equal to or greater than the threshold is specified (YES in S25), the information generation unit 113 generates the post-change circuit information 132 by setting the dimension of the thickness of the line corresponding to the combination specified in the processing of S24 to zero in the information included in the circuit information 131 stored in the information storage area 130 (S26).

On the other hand, in a case where the combination in which the value calculated in the processing of S23 is equal to or greater than the threshold is not specified (NO in S25), the information generation unit 113 does not perform the processing of S26.

### [Specific Example of Post-change Circuit Information (1)]

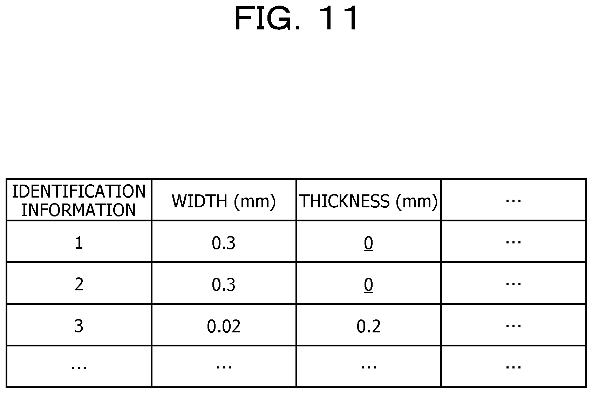

FIG. 11 is a table illustrating a specific example of the post-change circuit information 132. The post-change circuit information 132 illustrated in FIG. 11 is information generated by changing the circuit information 131 illustrated in FIG. 10.

Specifically, for example, in a case where "8.57..." is calculated as a calculation result (calculation result for the processing of S23) regarding the information with the "identification information" of "1" in the circuit information 131 illustrated in FIG. 10, and the threshold in the processing of S24 is "5", the information generation unit 113 determines to set the dimension of the thickness of the line corresponding to the information with the "identification information" of "1" to zero. Then, in this case, the information generation unit 113 updates the "thickness" of the information with the "identification information" of "1" (the information on the first row) to "0 (mm)", as illustrated in the underlined portion of FIG. 11, for example.

Furthermore, for example, in a case where "16.66..." is calculated as a calculation result (calculation result for the processing of S23) regarding the information with the "identification information" of "2" in the circuit information 131 illustrated in FIG. 10, and the threshold in the processing of S24 is "5", the information generation unit 113 determines to set the dimension of the thickness of the line corresponding to the information with the "identification information" of "2" to zero. Then, in this case, the information generation unit 113 updates the "thickness" of the information with the "identification information" of "2" (the information on the second row) to "0 (mm)", as illustrated in the underlined portion of FIG. 11, for example.

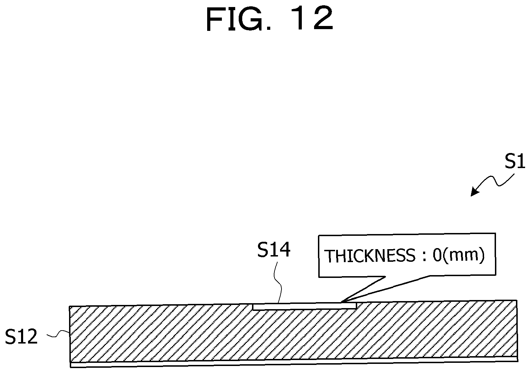

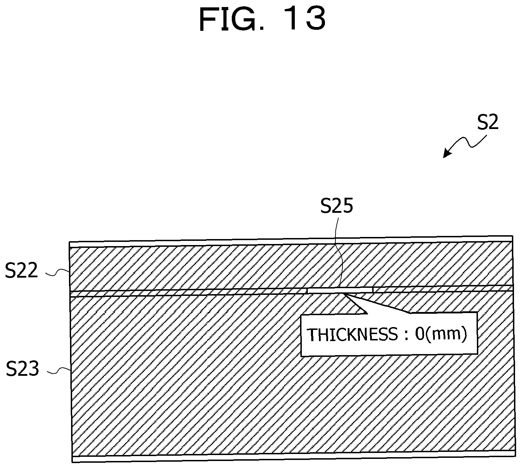

In other words, the information on the first row in the post-change circuit information 132 illustrated in FIG. 11 indicates that a line S14 without a thickness is arranged on the electronic circuit board S1 instead of the line S11 with the thickness, as illustrated in FIG. 12. Furthermore, the information on the second row in the post-change circuit information 132 illustrated in FIG. 11 indicates that a line S25 without a thickness is arranged on the electronic circuit board S2 instead of the line S21 with the thickness, as illustrated in FIG. 13.

Returning to FIG. 9, the information generation unit 113 specifies the combination in which a reciprocal of the value calculated in the processing of S23 is equal to or greater than a threshold among the combinations specified in the processing of S22, for example (S31).

As a result, in a case where the combination in which the reciprocal of the value calculated in the processing of S23 is equal to or greater than the threshold is specified (YES in S32), the information generation unit 113 generates the post-change circuit information 132 by setting the dimension of the width of the line corresponding to the combination specified in the processing of S31 to zero in the information included in the circuit information 131 stored in the information storage area 130 (S33).

On the other hand, in a case where the combination in which the reciprocal of the value calculated in the processing of S23 is equal to or greater than the threshold is not specified (NO in S32), the information generation unit 113 does not perform the processing of S33.

### [Specific Example of Post-change Circuit Information (2)]

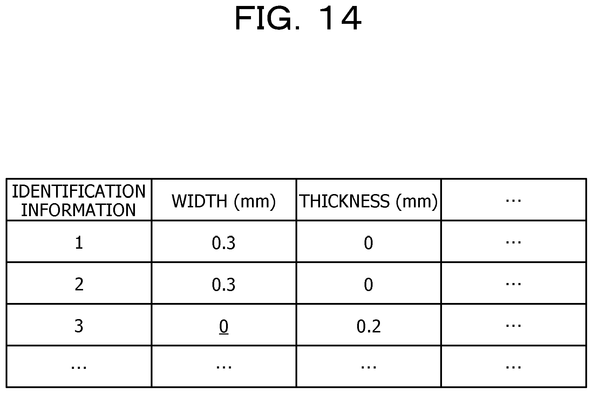

FIG. 14 is a table illustrating a specific example of the post-change circuit information 132. The post-change circuit information 132 illustrated in FIG. 14 is information generated by changing the circuit information 131 illustrated in FIG. 11.

Specifically, in information with the "identification information" of "3" (information on the third row)) in the circuit information 131 illustrated in FIG. 10, "0.02 (mm)" is set as the "width" and "0.2 (mm)" is set as the "thickness". In other words, the information with the "identification information" of "3" in the circuit information 131 illustrated in FIG. 10 indicates that the reciprocal of the calculation result of the processing of S23 is "10". Therefore, for example, in the case where the threshold in the processing of S24 is "5", the information generation unit 113 determines to set the dimension of the width of the line corresponding to the information with the "identification information" of "3" to zero. Then, in this case, the information generation unit 113 updates the "thickness" of the information with the "identification information" of "3" (the information on the third row) to "0 (mm)", as illustrated in the underlined portion of FIG. 14, for example.

Returning to FIG. 9, the analysis execution unit 114 of the information processing device 1 refers to the post-change circuit information 132 stored in the information storage area 130, and performs discretization for each line whose information is included in the post-change circuit information 132 (S34).

Specifically, the analysis execution unit 114 refers to the post-change circuit information 132 stored in the information storage area 130, and determines the dimension to which zero is not set among the dimension of the width and the dimension of the thickness of the line included in the electronic circuit board S as the minimum spatial discretization step, for example. Then, the analysis execution unit 114 performs mesh division for a three-dimensional space including the electronic circuit board S so that the determined minimum discretization step of the space becomes the mesh width, for example.

Thereafter, the analysis execution unit 114 performs the electromagnetic field analysis for each line discretized in the processing of S34 (S35).

Specifically, the analysis execution unit 114 calculates the temporal discrete step from the minimum spatial discretization step determined in the processing of S34. Moreover, specifically, the analysis execution unit 114 calculates the temporal discretization step such that the temporal discretization step becomes smaller than the time constant calculated by dividing the minimum spatial discretization step by the light speed according to the CFL condition. Then, the analysis execution unit 114 performs the electromagnetic field analysis of the electronic circuit board S by using the calculated temporal discretization step.

### [Influence due to Change of Line Thickness]

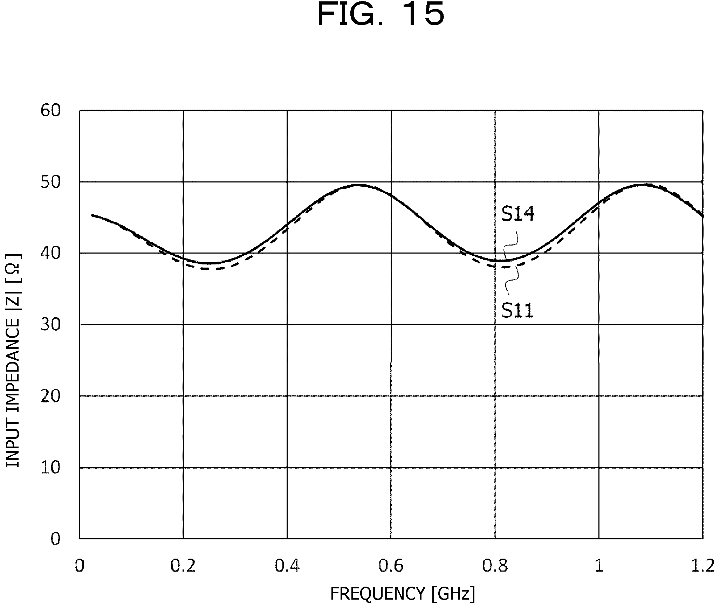

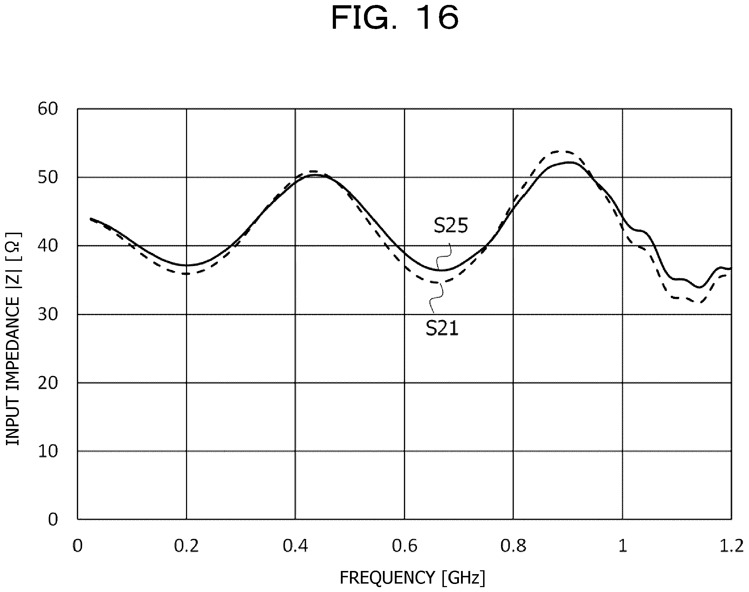

FIGs. 15 and 16 are graphs illustrating an influence due to change of the thickness of the line included in the electronic circuit board S. FIG. 15 is a graph illustrating an influence due to changing the line S11 included in the electronic circuit board S1 described in FIG. 2 to the line S14, and FIG. 16 is a graph illustrating an influence due to changing the line S21 included in the electronic circuit board S2 described in FIG. 3 to the line S25. Furthermore, the horizontal and vertical axes in FIGs. 15 and 16 respectively represent frequency and input impedance.

Note that, hereinafter, it is assumed that the dimension in the up-down direction (layer thickness) of the dielectric S12 in FIG. 2 is "0.166 (mm)", and the dimension in the up-down direction of the dielectric S22 in FIG. 3 is "0.216 (mm)", and the dimension in the up-down direction of the dielectric S23 in FIG. 3 is "0.784 (mm)".

Specifically, the example illustrated in FIG. 15 indicates that a difference between the input impedance in a case of using the line S11 (in other words, the input impedance in the state of FIG. 2) and the input impedance in a case of using the line S14 (in other words, the input impedance in the state of FIG. 12) is about 2 (Ω) at maximum.

Furthermore, the example illustrated in FIG. 16 indicates that a difference between the input impedance in a case of using the line S21 (in other words, the input impedance in the state of FIG. 3) and the input impedance in a case of using the line S25 (in other words, the input impedance in the state of FIG. 13 is about 3 (Ω) at maximum.

In other words, the examples illustrated in FIGs. 15 and 16 indicate that the outlines of the respective graphs match in a large sense. Furthermore, in the examples illustrated in FIGs. 15 and 16, the difference in the input impedance between the graphs is about 2 to 3 (Ω), which is sufficiently smaller than an average value of the input impedance in the graphs (about 45 (Ω)). Therefore, it can be determined that the examples illustrated in FIGs. 15 and 16 indicates that even in a case where the thickness of the line arranged on the electronic circuit board S is changed to zero, the influence on the characteristic impedance is small.

As described above, the information processing device 1 in the present embodiment refers to the circuit information 131 regarding the circuit included in the electronic circuit board (not illustrated) to be analyzed, and specifies the dimensions of the width and the thickness of the wiring whose information is included in the circuit information 131. Then, the information processing device 1 generates the post-change circuit information 132 in which one of the specified dimensions of width and thickness has been changed to zero based on the ratio between the specified dimensions of the width and the thickness. Thereafter, the information processing device 1 executes an electromagnetic field analysis based on the generated second circuit information.

In other words, characteristics of the circuit included in the electronic circuit board S are determined by, for example, the dimensions of the width and thickness of the line, the dimension of the thickness of a layer that configures the electronic circuit board S, and characteristic impedance based on relative permittivity. Therefore, for example, in a case where the dimension of the thickness of the line and the dimension of the width of the line are significantly different, it can be determined that the smaller one of the dimensions of the thickness and the width has less influence on the characteristic impedance.

Therefore, for example, in a case where the dimension of the thickness of the line is sufficiently smaller than the dimension of the width of the line, it can be determined that the influence on the characteristics of the circuit after discretization is performed is small even in a case of changing the dimension of the thickness of the line to be smaller. Meanwhile, for example, in a case where the dimension of the width of the line is sufficiently smaller than the dimension of the thickness of the line, it can be determined that the influence on the characteristics of the circuit after discretization is performed is small even in a case of changing the dimension of the width of the line to be smaller.

Therefore, in the case where the dimension of the thickness of the line is sufficiently smaller than the dimension of the width of the line, the information processing device 1 in the present embodiment performs discretization of the circuit included in the electronic circuit board S after changing the dimension of the thickness of the line to zero by replacing the line with a two-dimensional PEC. Furthermore, in the case where the dimension of the width of the line is sufficiently smaller than the dimension of the thickness of the line, the information processing device 1 in the present embodiment performs discretization of the circuit included in the electronic circuit board S after changing the dimension of the width of the line to zero by replacing the line with a two-dimensional PEC.

Therefore, the information processing device 1 according to the present embodiment can prevent the minimum length scale of the electronic circuit board S from being determined by the smaller one of the dimensions of the width and thickness of the wiring. Therefore, the information processing device 1 can prevent the minimum spatial discretization step from becoming extremely small when performing discretization for the circuit included in the electronic circuit board S.

Specifically, for example, in a case where mesh division is performed to make grid intervals uniform, the total number of grids can be suppressed, and the minimum spatial discretization step can be increased. Furthermore, in a case where mesh division is performed to make the grid intervals ununiform, the intervals between adjacent grids are not able to be changed greatly. However, even in this case, the total number of grids can be suppressed and the minimum spatial discretization step can be increased.

Moreover, the information processing device 1 can prevent the temporal discretization step determined by the CFL condition from becoming small by increasing the minimum spatial discretization step.

Therefore, the information processing device 1 can suppress the problem size when performing the electromagnetic field analysis, and can suppress an increase in the amount of calculation required for the electromagnetic field analysis.

Note that, in recent years, when measuring EMI radiated when current flows through an electronic circuit board, there are cases where a machine learning model generated using the analysis result by the FDTD method as a correct label is used. Therefore, the information processing device 1 according to the present embodiment may generate training data to be used to generate the above-described machine learning model by using a current distribution of a circuit specified in the electromagnetic field analysis in the present embodiment as a feature, for example.

### REFERENCE SIGNS LIST

1Information processing device
2Operation terminal
10Information processing system
NWNetwork

## Claims

1. An electromagnetic field analysis program that causes at least one computer to execute a process, the process comprising:
specifying a dimension of a width and a dimension of a thickness of wiring included in first circuit information;
generating second circuit information obtained by changing one of the dimension of the width or the dimension of the thickness to zero based on a ratio between the dimension of the width and the dimension of the thickness; and
executing an electromagnetic field analysis based on the second circuit information.

2. The electromagnetic field analysis program according to claim 1, wherein
the processing of generating includes generating the second circuit information by changing the dimension of the thickness to zero in a case where the ratio indicates that the dimension of the width is greater than the dimension of the thickness, and the dimension of the width with respect to the dimension of the thickness is equal to or greater than a threshold.

3. The electromagnetic field analysis program according to claim 1, for causing the computer to further execute processing comprising:
generating training data to be used to generate a machine learning model based on a result of the electromagnetic field analysis.

4. The electromagnetic field analysis program according to claim 3, wherein
the processing of generating training data includes generating the training data so as to include information that indicates a current distribution of a circuit specified by the electromagnetic field analysis.

5. The electromagnetic field analysis program according to claim 1, wherein
the processing of generating includes generating the second circuit information by changing the dimension of the width to zero in a case where the ratio indicates that the dimension of the thickness is greater than the dimension of the width, and the dimension of thickness with respect to the dimension of the width is equal to or greater than a threshold.

6. An electromagnetic field analysis device comprising:
a storage unit configured to store first circuit information; and
a control unit configured to specify a dimension of a width and a dimension of a thickness of wiring included in the first circuit information, generate second circuit information obtained by changing one of the dimension of the width or the dimension of the thickness to zero based on a ratio between the dimension of the width and the dimension of the thickness, and execute an electromagnetic field analysis based on the second circuit information.

7. The electromagnetic field analysis device according to claim 6, wherein the control unit is configured to
generate the second circuit information by changing the dimension of the thickness to zero in a case where the ratio indicates that the dimension of the width is greater than the dimension of the thickness, and the dimension of the width with respect to the dimension of the thickness is equal to or greater than a threshold.

8. The electromagnetic field analysis device according to claim 6, wherein the control unit is configured to
generate the second circuit information by changing the dimension of the width to zero in a case where the ratio indicates that the dimension of the thickness is greater than the dimension of the width, and the dimension of thickness with respect to the dimension of the width is equal to or greater than a threshold.

9. An electromagnetic field analysis method executed by a computer, the electromagnetic field analysis method comprising:
specifying a dimension of a width and a dimension of a thickness of wiring included in first circuit information;
generating second circuit information obtained by changing one of the dimension of the width or the dimension of the thickness to zero based on a ratio between the dimension of the width and the dimension of the thickness; and
executing an electromagnetic field analysis based on the second circuit information.

10. The electromagnetic field analysis method according to claim 9, wherein the processing of generating includes generating the second circuit information by changing the dimension of the thickness to zero in a case where the ratio indicates that the dimension of the width is greater than the dimension of the thickness, and the dimension of the width with respect to the dimension of the thickness is equal to or greater than a threshold.

11. The electromagnetic field analysis method according to claim 9, wherein the processing of generating includes generating the second circuit information by changing the dimension of the width to zero in a case where the ratio indicates that the dimension of the thickness is greater than the dimension of the width, and the dimension of thickness with respect to the dimension of the width is equal to or greater than a threshold.
